# EUROPEAN PATENT SPECIFICATION

(11) **EP 4 139 590 B1**
(45) Date of publication and mention of the grant of the patent: **21.10.2026**
(21) Application number: 21714166.2
(22) Date of filing: 25.03.2021
(51) Int. Cl.: F16J 15/16, F16J 15/18, F16J 15/324, F16J 15/34, B04B 9/00, B04B 7/00, B04B 11/02

(54) **A CENTRIFUGAL SEPARATOR**
SÉPARATEUR CENTRIFUGE
DISPOSITIF DE JOINT MÉCANIQUE

(30) Priority: 24.04.2020 EP 20171270
(43) Date of publication of application: 01.03.2023
(73) Proprietor: Alfa Laval Corporate AB, 221 00 Lund (SE)
(72) Inventor: FORSSLUND, Johan, 112 66 STOCKHOLM (SE)
(74) Representative: Alfa Laval Attorneys
(86) International application number: PCT/EP2021/057735
(87) International publication number: WO 2021/213776

(56) References cited:
- WO-A1-2009/008393
- JP-A- 2009 156 294
- JP-A- 2019 158 025
- JP-A- S5 533 923
- JP-A- S55 126 161
- US-A1- 2018 023 559

## Description

### TECHNICAL FIELD

The invention relates to a centrifugal separator according to the appended claims.

### BACKGROUND AND PRIOR ART

Centrifugal separators are configured to separate liquids, gases and solid particles from each other.

In addition, liquids of different density, which are mixed together, may also be separated from each other in the centrifugal separator. Gases of different density, which are mixed together, may also be separated from each other in the centrifugal separator. The centrifugal separator should be sealed on order to prevent the liquids, gases or solid particles to leak out from the centrifugal separator. Since some parts of the centrifugal separator rotate, leakage may occur between the rotational parts and stationary parts. Therefore, mechanical seals may be arranged between the rotational and stationary parts in the separator. Due to the relative rotational movement between the rotational and stationary parts, heat may be generated between the sealing surfaces of the mechanical seals, which are arranged between these rotational and stationary parts. In some centrifugal separator applications, the mechanical seal may provide a hermetic seal.

Document US 2020/016610 A1 discloses a seal assembly for a centrifugal separator. The seal assembly comprises two sealing rings, which are arranged so that a double contact seal is formed upon engagement of the two sealing rings. A chamber in one or both sealing rings may be supplied with a cooling fluid. The chamber may be used for detecting leaks in the seal assembly. Further, a fluid under pressure may be supplied to the chamber in order to prevent leakage in the seal assembly.

Document US4654023 A, discloses a mechanical seal for a casing of centrifugal separators. Two sealing rings are abutting axially against each other, one is rotatable and one is non-rotatable, in order to seal the interior of the casing from connection with the space surrounding a radial bearing via the opening in the bottom of the casing.

JP2019 158 025 A discloses a further mechanical seal.

### SUMMARY OF THE INVENTION

The generated heat in the mechanical seal due to the relative movement between the seal surfaces may reduce the life span of the mechanical seal. In addition, the generated heat in the mechanical seal may result in seal failure and leakage. Further, large temperature differences in different areas of the mechanical seal may result in seal failure and leakage, and a reduced life span.Therefore, there is a need to develop a mechanical seal device for a centrifugal separator having a longer life span and which provides a tight seal without seal failure and leakage. Further, there is a need to develop a mechanical seal device for a centrifugal separator in which the temperature differences in the seal are low. In addition, there is a need to develop a centrifugal separator provided with a mechanical seal device having a long life span and which provides a tight seal without seal failure and leakage.

Thus, an object of the present invention is to develop a mechanical seal device for a centrifugal separator having a long life span and which provides a tight seal without seal failure and leakage. Further, there is an object to develop a mechanical seal device for a centrifugal separator, which provides a hermetic seal. Further, there is an object to develop a mechanical seal device for a centrifugal separator in which the temperature differences in the seal is low. In addition, there is an object to develop a centrifugal separator provided with a mechanical seal device having a long life span and which provides a tight seal without seal failure and leakage.

This is achieved by a centrifugal separator comprising a mechanical seal device according to the appended claims.

### BRIEF DESCRIPTION OF THE DRAWINGS

For fuller understanding of the present disclosure and further objects and advantages of it, the detailed description set out below should be read together with the accompanying drawings, in which the same reference notations denote similar items in the various figures, and in which:
Fig. 1 schematically illustrates a centrifugal separator according to an example,
Fig. 2 schematically illustrates a sectional view of an in- and outlet device of a centrifugal separator according to an example,
Fig. 3 schematically illustrates a sectional view along line I - I in fig. 2, and
Fig. 4 schematically illustrates a detail view of fig. 2.

### DETAILED DESCRIPTION OF THE DRAWINGS

According to the present disclosure, a mechanical seal device for a centrifugal separator is provided.

The mechanical seal device comprises: a first seal ring comprising a first seal surface and a second seal ring comprising a second seal surface, wherein the first and second seal surfaces are configured to face each other to form a seal of the mechanical seal device. The first seal ring has a first central axis and the second seal ring has a second central axis, wherein the first central axis of the first seal ring is configured to coincide with the second central axis of the second seal ring. This means that the first and second seal rings may have a common central axis. At least one channel for a cooling fluid is arranged in the first seal ring, wherein the at least one channel comprises an inlet and an outlet. The outlet of the at least one channel is arranged at, i.e. next to or beside, the first seal surface of the first seal ring. The outlet of the at least one channel is arranged at a larger radial distance from the first central axis than an outer radius of the formed seal.

The formed seal of the mechanical seal device is thus located radially inwards of the outlet of the channel. The mechanical seal device does not form further seals or sealing interfaces between opposing surfaces of the first and second sealings rings, which extend radially an in the same axial plane as the first and second surfaces, i.e. radially outwards of the channel for the cooling fluid. Thus, the formed seal is a type of a single contact seal.

The mechanical seal device may be arranged between a rotational part and stationary part in the centrifugal separator. The mechanical seal device may alternatively be arranged between two rotational parts, which have different rotational speeds. The mechanical seal device may be configured to prevent fluids or gases to pass the seal. The fluid or gas may however form a very thin film between the seal surfaces of the seal. This thin film has a lubricating effect on the seal surfaces.

The mechanical seal device may provide a hermetic seal, which prevents any fluid or gas to pass the seal.

The centrifugal separator may be configured for separating fluids and gases with different densities. The separator may comprise a rotor that forms within itself a separation chamber in which centrifugal separation of the fluids or gases takes place during operation. The separation chamber is provided with a stack of frusto-conical separation discs to facilitate effective separation of the fluids or gases. The stack of truncated conical separation discs are examples of surface-enlarging inserts and are fitted centrally and coaxially with the rotor. During operation of the separator, fluids or gases to be separated are brought into the separation space. Depending on the density, different phases in the fluids or gases are separated between the separation discs. A heavier component of the fluids or gases moves radially outwards between the separation discs, whereas the phase of lowest density, moves radially inwards between the separation discs and is forced through an outlet arranged at the radial innermost level in the separator. The component of higher density is instead forced out through an outlet that is at a larger radial distance. Any possible solids, or sludge, in the fluid will accumulate at the periphery of the separation chamber and is emptied intermittently from the separation space by a set of radially sludge outlets being opened, whereupon the sludge is discharged.

The first seal ring may have a diameter and axial extension, which are adapted for the type and size of the centrifugal separator. The first seal surface of the first seal ring has a circular configuration. The first seal surface has a smoothness that provides for an effective seal of fluids and gases.

The second seal ring may have a diameter and axial extension, which are adapted for the type and size of the centrifugal separator. The second seal surface of the second seal ring has a circular configuration. The second seal surface has a smoothness that provides for an effective seal of fluids and gases.

The first and second seal surfaces are configured to face each other. The contact area between the first and second seal surfaces constitutes the seal of the mechanical seal device. Alternatively, an interface provided by a thin film of fluid or gas between the first and second seal surfaces constitutes the seal of the mechanical seal device.

The first and second seal surfaces may have same or different areas. The first and second seal surfaces may have same or different smoothness.

An actuator may be arranged for urging the first and second seal surfaces together. Such actuator may be a spring, such as a coil spring.

Due to the relative rotational movement between the first and second seal surfaces, heat may be generated in the sealing surfaces and in the first and second seal rings. In addition, the fluids and gases to be separated in the centrifugal separator may have a high temperature, which may increase the temperature in the first and second seal rings. The at least one channel, which is arranged in the first seal ring is configured to reduce the temperature in the mechanical seal device. In addition, the at least one channel is configured to equalize the temperature in the first seal ring. An equalized temperature in the first seal ring may prevent cracks and deformations in the first seal ring and the first seal surface. In addition, the at least one channel is configured to equalize the temperature in the second seal ring. An equalized temperature in the second seal ring may prevent cracks and deformations in the second seal ring and the second seal surface.

The cooling fluid may be provided from a cooling fluid source, which is connected to the centrifugal separator and the at least one cooling channel of the mechanical seal device. The cooling fluid may be cooled in the cooling fluid source. The cooling fluid may have a certain initial temperature when it enters the centrifugal separator, which is adapted to the specific separation process in the centrifugal separator. The cooling fluid may be a liquid, a gas or a powder. The cooling fluid may have lubricating properties. The cooling fluid absorbs heat in the mechanical seal device and thus reduces the temperature in the mechanical seal device. A pump may be arranged for generating a flow of the cooling fluid in the at least one channel. The gravity may generate a flow of the cooling fluid in the at least one channel.

The at least one channel comprises an inlet and an outlet arranged in the first seal ring. The cooling fluid is configured to enter the at least one channel through the inlet, and to leave the at least one channel through the outlet. Thus, the at least one channel may form a cooling channel.

Since the outlet of the at least one channel is arranged at, i.e. beside the first seal surface of the first seal ring, the cooling fluid will pass adjacent to the first seal surface. Heat generated by the relative movement of the first and second seal surfaces may be absorbed by the cooling fluid, when the cooling fluid flows in the at least one channel. When the cooling fluid flows out of the at least one channel, the cooling fluid flows to the area of the first and second seal surfaces. Heat generated by the relative movement of the first and second seal surfaces may be absorbed by the cooling fluid, when the cooling fluid has a fluid connection with the first and second seal surfaces. This will reduce the temperature in the first and second seal surfaces.

Further, since the outlet of the at least one channel is arranged at a larger radial distance from the first central axis than an outer radius of the formed seal, the outlet of the at least one channel will be arranged radially outwards of the outer radius of the first seal surface of the first seal ring. This configuration will reduce the temperature in the seal rings and also in the first and second seal surfaces.

According to an aspect, the outlet of the at least one channel is arranged in fluid connection with the first seal surface of the first seal ring and the second seal surface of the second seal ring.

According to an aspect, an outer radius of the second seal surface of the second seal ring is larger than the outer radius of the first seal surface of the first seal ring, and wherein the outlet of the at least one channel is directed towards the second seal surface of the second seal ring. Thus, the outlet of the at least one channel is arranged and positioned at least partly radially inside the outer radius of the second seal surface of the second seal ring. This will result in the cooling fluid flowing on that part of the second seal surface which is positioned radially outside the outer radius of the first seal surface of the first seal ring. Heat generated in the second seal ring may then be effectively absorbed by the cooling fluid, when the cooling fluid has a fluid connection directly with the second seal surface. This will reduce the temperature in the second seal surface. Further, when the cooling fluid flows on that part of the second seal surface which is positioned radially outside the outer radius of the first seal surface of the first seal ring, the cooling fluid may easily enter between the seal surfaces and form a very thin film between the seal surfaces. This thin film has a lubricating effect on the seal surfaces.

According to the invention, a restriction portion is arranged in or at the at least one channel for restricting the flow of the cooling fluid.

The restriction portion will reduce the flow rate of the cooling fluid in the at least one channel. In addition, the volume flow of the cooling fluid in the at least one channel will be reduced by the restriction portion. The restriction portion may be a portion of the at least one channel having a reduced diameter. The entire length of the at least one channel may be provided with a reduced diameter in order to achieve a reduced flow rate and volume flow.

According to an aspect, the restriction portion is configured to at least partly cover the inlet opening of the at least one channel.

The restriction portion may be a member arranged to partly cover the inlet opening and thus restrict the cooling fluid to enter the inlet opening. The restriction portion may be a member arranged in the inlet opening and in the at least one channel for partly cover the inlet opening. The restriction portion may be a member arranged on the outside of the inlet opening and thus on the outside of the at least one channel for partly cover the inlet opening. The restriction portion will reduce the flow rate and the volume flow of the cooling fluid in the at least one channel.

According to an aspect, the restriction portion is a washer element configured to rest on the first seal ring and configured to at least partly cover the inlet of the at least one channel.

The inner diameter of the washer element may be larger than the inner diameter of the first seal ring. The inlet of the at least one channel in the first seal ring may be partly covered by the inner periphery of the washer element. The outer diameter of the washer element may be smaller than the outer diameter of the first seal ring. The inlet of the at least one channel in the first seal ring may be partly covered by the outer periphery of the washer element. The inner or outer periphery of the washer element may be provided with a bevel, which is adapted so the washer element partly covers the inlet of the at least one channel. Alternatively, the washer element may comprise a through hole having a smaller diameter than the inlet of the at least one channel.

According to an aspect, at least two channels are evenly distributed around the first seal ring.

Distributing the at least two channels evenly around the first seal ring may evenly distribute the flow of the cooling fluid through the channels. This will equalize the temperature in the first seal ring and the thus avoid any temperature gradients in the first seal ring.

According to an aspect, the number of channels may be in the interval 2-10, such as 4 - 8, for example 6, which channels are evenly distributed around the first seal ring. Thereby, sufficient cooling around the periphery of the sealing ring can be provided, while the mechanical properties are not negatively affected. However, a large centrifugal separator provided with a mechanical seal device with a large diameter may comprise a larger number of channels, which are evenly distributed around the first seal ring.

By evenly distributing the channels around the first seal ring may evenly distribute the flow of the cooling fluid through the channels. This will equalize the temperature in the first seal ring and thus avoid any temperature gradients in the first seal ring.

According to an aspect, the material in the second seal ring is harder than the material in the first seal ring.

Since the first seal surface of the first seal ring may slide on the second seal surface of the second seal ring during the relative movement between the first and second seal rings, wear of the surfaces may occur. Since the material in the second seal ring is harder than the material in the first seal ring, the wear will substantially occur in the first sealing ring. Therefore, only the first seal ring may be replaced during maintenances of the mechanical seal device.

According to an aspect, the material in the second seal ring comprises silicon carbide and the material in the first seal ring is graphite.

The silicon carbide in the second seal ring is harder than the graphite in the first seal ring. Therefore, wear will substantially occur in the first sealing ring. Thus, only the first seal ring may be replaced during maintenances of the mechanical seal device. The first seal ring made of graphite may be manufactured at low cost. Thus, the replacement of the first seal ring can be done to low cost.

According to an aspect, the material in the second seal ring has a larger thermal conductivity than the thermal conductivity of the material in the first seal ring.

The larger thermal conductivity in the second seal ring may absorb heat from the heat generation in the relative movement of the seal surfaces and transfer the heat away from the second seal surface. Since the at least one channel is arranged in the first seal ring, generated heat will be transferred away from the first seal ring by means of the cooling fluid.

According to an aspect, the at least one channel in the first seal ring has an extension parallel with the first central axis.

By arranging the first seal ring in a position so that the first central axis has a vertical extension in the centrifugal separator, the at least one channel in the first seal ring will also have a vertical extension. The cooling fluid may flow by gravity in the at least one channel if the channel has a vertical extension.

According to an aspect, the first seal surface of the first seal ring has first normal and the second seal surface of the second seal ring has a second normal, and wherein the direction of the first and second normal are in parallel with the direction of the first central axis of the first seal ring and with the second central axis of the second seal ring.

The first and second seal surfaces are configured to face each other to form the seal. The first and second normals of the seal surfaces are thus directed towards each other. This arrangement will result in a tight seal without seal failure and leakage. The contact area of the first and second seal surface will be defined by the inner and outer diameter of the first and second seal rings.

According to an aspect, the first seal ring is configured to be stationary arranged and the second seal ring is configured to be rotatably arranged.

A stationary first seal ring may simplify the arrangement of guiding the cooling fluid through the at least one channel.

According to the present invention, a centrifugal separator is provided. The centrifugal separator comprises the mechanical seal device disclosed herein.

Such centrifugal separator provided with the mechanical seal device disclosed herein will have a prolonged life span and will also provide a tight seal with reduced risk for seal failure and leakage. In addition, the maintenance of the mechanical seal device in the centrifugal separator will be simplified and done to a low cost.

The mechanical seal device for a centrifugal separator and the centrifugal separator comprising the mechanical seal device will now be described together with the appended drawings.

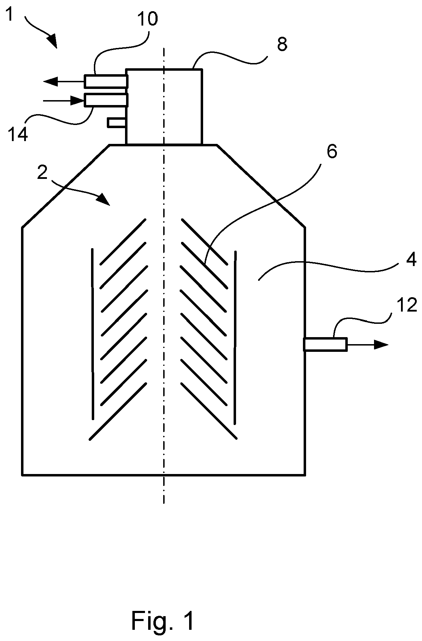

Fig. 1 schematically illustrates a centrifugal separator 1 according to an example. The separator 1 comprises a rotor 2 that forms within itself a separation chamber 4 in which centrifugal separation of the fluids or gases takes place during operation. The separation chamber 4 is provided with a stack of frusto-conical separation discs 6 to facilitate effective separation of the fluids or gases. During operation of the separator, fluids or gases to be separated are brought into the separation chamber 4 through an in- and outlet device 8 of the centrifugal separator 1. Depending on the density, different phases in the fluids or gases are separated between the separation discs. A heavier component of the fluids or gases will move radially outwards between the separation discs 6, whereas the phase of lowest density, will move radially inwards between the separation discs 6 and is forced through a first outlet 10 arranged at the radial innermost level in the separator 1 and further to the in- and outlet device 8. The component of higher density is forced out through a second outlet 12 that is at a larger radial distance, which component will be emptied intermittently from the separation chamber 4. The in- and outlet device 8 comprises a first inlet 14 for fluids or gases to be separated

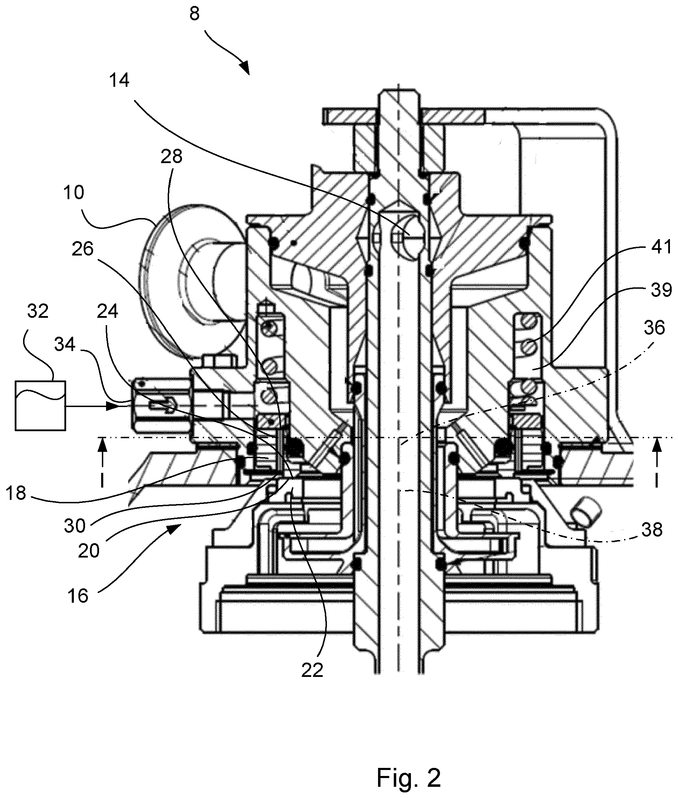

Fig. 2 schematically illustrates a sectional view of an in- and outlet device 8 of a centrifugal separator 1 according to an example. The in- and outlet device 8 comprises the first inlet 14 and the first outlet 10. A mechanical seal device 16 is arranged in the in- and outlet device 8. The mechanical seal device 16 comprising a first seal ring 18, which has a first seal surface 20 and a second seal ring 22, which has a second seal surface 24. The first and second seal surfaces 20, 24 are configured to face each other to form a seal. Channels 26 for a cooling fluid is arranged in the first seal ring 18. Each channel 26 comprises an inlet 28 and an outlet 30. The outlet 30 of each channel 26 is arranged at, i.e. beside, the first seal surface 20 of the first seal ring 18. Each channel 26 is arranged in fluid connection with the first seal surface 20 of the first seal ring 18 and the second seal surface 24 of the second seal ring 22. The cooling fluid is provided from a cooling fluid source 32, which is connected to a second inlet 34 of the centrifugal separator 1. The first seal ring 18 is configured to be stationary arranged in the in- and outlet device 8. The second seal ring 22 is connected to a rotatable component of the centrifugal separator 1 and therefore the second seal ring 22 is configured to be rotatably arranged.

The first seal ring 18 has a first central axis 36 and the second seal ring 22 has a second central axis 38. The channels 26 in the first seal ring 18 extend in parallel with the first central axis 36. The first central axis 36 of the first seal ring 18 coincides with the second central axis 38 of the second seal ring 22.

The cooling fluid enters the centrifugal separator 1 through the second inlet 34. From the second inlet 34 the cooling fluid flows into a cavity 39 in which an actuator 41 is arranged for urging the first and second seal surfaces 20, 24 together. In fig. 2 the actuator 41 is a spring.

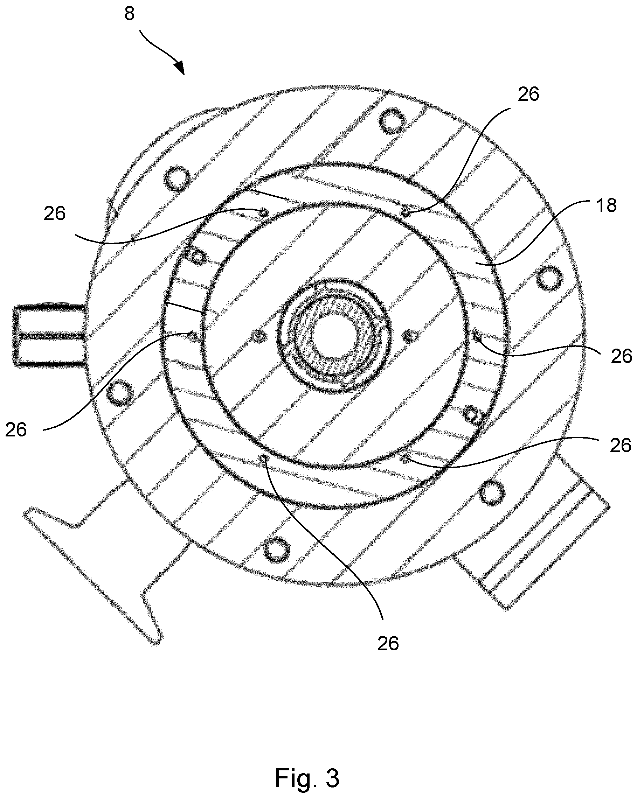

Fig. 3 schematically illustrates a sectional view along line I - I in fig. 2. Six channels 26 are arranged in the first seal ring 18. The channels 26 are evenly distributed around the first seal ring 18, so that flow of cooling fluid through the channels 26 is evenly distributed. The evenly distributed channels 26 in the first seal ring 18 will equalize the temperature in the first seal ring 18 and thus avoid any temperature gradients in the first seal ring 18.

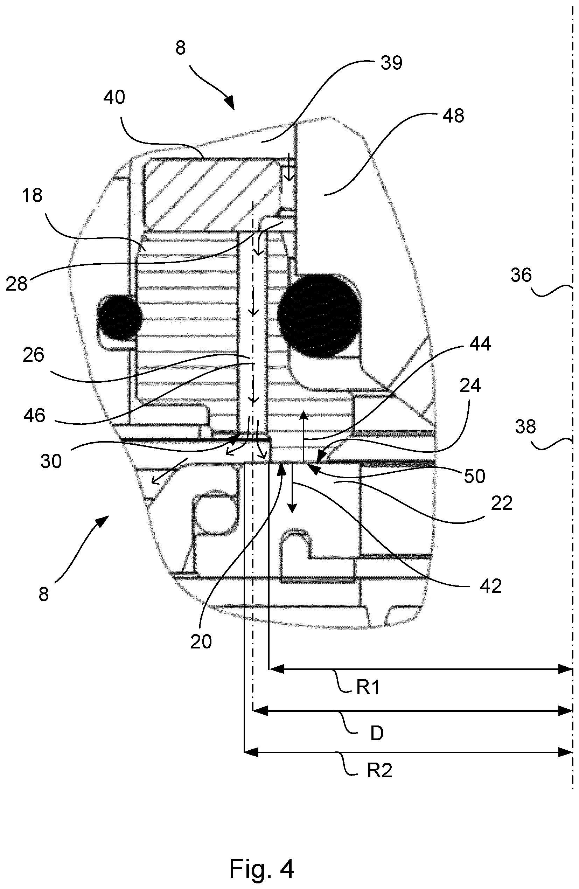

Fig. 4 schematically illustrates a detailed view of fig. 2. The detailed view shows the mechanical seal device 16 in more detail. A washer element 40 is configured to rest on the first seal ring 18 and configured to at least partly cover the inlet 28 of the channel 26. The washer element 40 will restrict the flow of the cooling fluid in the channel 26. By associating washer elements or other restrictions of this type in connection with each channel, the flow of the cooling fluid through the channels 26 can be evenly distributed.

The first seal surface 20 of the first seal ring 18 has first normal 42 and the second seal surface 24 of the second seal ring 22 has a second normal 44. The direction of the first and second normals 42, 44 is parallel with the direction of the first central axis 36 of the first seal ring 18 and with the second central axis 38 of the second seal ring 22. A seal and/or sealing interface 50 of the mechanical seal device 16 is formed between the first and second seal surfaces 20, 24.

Arrows 46 in fig. 4 represent the flow direction and the flow path of the cooling fluid. The cooling fluid enters the centrifugal separator 1 through the second inlet 34 (see fig. 2) and further into the cavity 39. From the cavity 39 the cooling fluid flows through a circular passage formed between the washer element 40 and a static element 48 of the in- and outlet device 8 of the centrifugal separator 1. Thereafter, the cooling fluid flows into the inlet 28 of the channels 26 and towards the outlet 30.

The outlet 30 of the channel 26 is arranged at a larger radial distance D from the first central axis 36 than an outer radius R1 of the first seal surface 20 of the first seal ring 18. The outer radius R1 also forms an outer radius R1 for the formed seal 50, since the seal is formed between the first and second seal surfaces 20, 24. Thus, the outlet 30 of the channel 26 will be arranged radially outside the outer radius R1 of the first seal surface 20 of the first seal ring 18. The outlet 30 of the channel 26 is arranged at, i.e. beside the first seal surface 20 of the first seal ring 18. The cooling fluid will therefore pass adjacent to the first seal surface 20 and thus the seal 50 of the mechanical seal device. No further seals between the first and second seal surfaces of the first and second seal rings are comprised radially outwards of the seal 50, as can be seen from the drawing.

An outer radius R2 of the second seal surface 24 of the second seal ring 22 is larger than the outer radius R1 of the first seal surface 20 of the first seal ring 18, and in this way the outlet 30 of the at least one channel 26 can be directed towards the second seal surface 24 of the second seal ring 22. In this way the cooling fluid will therefore flow on the part of the second seal surface 24, which is positioned radially outside of the first seal surface 20 of the first seal ring 18 having the outer radius R1. A small part of the flow of the cooling fluid may thus enter between the seal surfaces 20, 24 and form a very thin fluid film between the seal surfaces 20, 24. However, the majority of the cooling fluid after passing the first and second seal rings 18, 22 will drain though an outlet port (not shown) of the centrifugal separator 1.

The foregoing description of the examples of the present invention is provided for illustrative and descriptive purposes. It is not intended to be exhaustive or to restrict the disclosure to the examples and variants described.

## Claims

1. A centrifugal separator (1) comprising a mechanical seal device (16) wherein the separator (1) comprising:
a rotor (2) that forms within itself a separation chamber (4) and wherein the separation chamber comprises a stack of frusto-conical separation discs (6);
and wherein the mechanical seal device (16) comprising:
a first seal ring (18) comprising a first seal surface (20);
a second seal ring (22) comprising a second seal surface (24), wherein the first and second seal surfaces (20, 24) are configured to face each other to form a seal (50) of the mechanical seal device;
the first seal ring (18) has a first central axis (36) and the second seal ring (22) has a second central axis (38), wherein the first central axis (36) of the first seal ring (18) is configured to coincide with the second central axis (38) of the second seal ring (22);
at least one channel (26) for a cooling fluid is arranged in the first seal ring (18),
wherein the at least one channel (26) comprises an inlet (28) and an outlet (30);
the outlet (30) of the at least one channel (26) is arranged at the first seal surface (20) of the first seal ring (18), wherein the outlet (30) of the at least one channel (26) is arranged at a larger radial distance (D) from the first central axis (36) than an outer radius (R1) of the formed seal (50), wherein
a restriction portion (40) is arranged in connection with the at least one channel (26) for restricting the flow of the cooling fluid.

2. The separator (1) according to claim 1, wherein the outlet (30) of the at least one channel (26) is arranged in fluid connection with the first seal surface (20) of the first seal ring (18) and the second seal surface (24) of the second seal ring (22).

3. The separator (1) according to any one of claims 1 and 2, wherein an outer radius (R2) of the second seal surface (24) of the second seal ring (22) is larger than the outer radius (R1) of the first seal surface (20) of the first seal ring (18), and wherein the outlet (30) of the at least one channel (26) is directed towards the second seal surface (24) of the second seal ring (22).

4. The separator (1) according to any one of the preceding claims, wherein the restriction portion (40) is configured to at least partly cover the inlet (28) of the at least one channel (26).

5. The separator (1) according to any one of the preceding claims, wherein the restriction portion (40) is a washer element (40) configured to rest on the first seal ring (18) and configured to at least partly cover the inlet (28) of the at least one channel (26).

6. The separator (1) according to any one of the preceding claims, wherein at least two channels (26) are evenly distributed around the first seal ring (18).

7. The separator (1) according to any one of the preceding claims, wherein the number of channels (26) is in the interval 4 - 8, which channels (26) are evenly distributed around the first seal ring (18).

8. The separator (1) according to any one of the preceding claims, wherein the material in the second seal ring (22) is harder than the material in the first seal ring (18).

9. The separator (1) according to any one of the preceding claims, wherein the material in the second seal ring (22) comprises silicone carbide and the material in the first seal ring (18) is graphite.

10. The separator (1) according to any one of the preceding claims, wherein the material in the second seal ring (22) has a larger thermal conductivity than the thermal conductivity of the material in the first seal ring (18).

11. The separator (1) according to any one of the preceding claims, wherein the at least one channel (26) in the first seal ring (18) has an extension parallel with the first central axis (36).

12. The separator (1) according to any one of the preceding claims, wherein the first seal surface (20) of the first seal ring (18) has first normal (42) and the second seal surface (24) of the second seal ring (22) has a second normal (44), and wherein the directions of the first and second normals (42, 44) are parallel with the direction of the first central axis (36) of the first seal ring (18) and with the second central axis (38) of the second seal ring (22).

13. The separator (1) according to any one of the preceding claims, wherein the first seal ring (18) is configured to be stationary and the second seal ring (22) is configured to be rotatable.

## Patentansprüche

1. Zentrifugalabscheider (1), der eine mechanischen Dichtungsvorrichtung (16) umfasst, wobei der Abscheider (1) Folgendes umfasst:
einen Rotor (2), der in sich eine Abscheidungskammer (4) bildet und wobei die Abscheidungskammer einen Stapel von kegelstumpfförmigen Scheidetellern (6) umfasst;
und wobei die mechanische Dichtungsvorrichtung (16) Folgendes umfasst:
einen ersten Dichtring (18), der eine ersten Dichtfläche (20) umfasst;
einen zweiten Dichtring (22), der eine zweite Dichtfläche (24) umfasst, wobei die erste und die zweite Dichtfläche (20, 24) dafür konfiguriert sind, einander zugewandt zu sein, um eine Dichtung (50) der mechanischen Dichtungsvorrichtung zu bilden;
der erste Dichtring (18) eine erste Mittelachse (36) aufweist und der zweite Dichtring (22) eine zweite Mittelachse (38) aufweist, wobei die erste Mittelachse (36) des ersten Dichtrings (18) dafür konfiguriert ist, mit der zweiten Mittelachse (38) des zweiten Dichtrings (22) übereinzustimmen;
im ersten Dichtring (18) mindestens ein Kanal (26) für ein Kühlmedium angeordnet ist, wobei der mindestens eine Kanal (26) einen Einlass (28) und einen Auslass (30) umfasst;
der Auslass (30) des mindestens einen Kanals (26) an der ersten Dichtfläche (20) des ersten Dichtrings (18) angeordnet ist, wobei der Auslass (30) des mindestens einen Kanals (26) in einem größeren radialen Abstand (D) von der ersten Mittelachse (36) angeordnet ist als ein Außenradius (R1) der gebildeten Dichtung (50), wobei
zum Drosseln des Stroms des Kühlmittels ein Drosselabschnitt (40) in Verbindung mit dem mindestens einen Kanal (26) angeordnet ist.

2. Abscheider (1) nach Anspruch 1, wobei der Auslass (30) des mindestens einen Kanals (26) in Fluidverbindung mit der ersten Dichtfläche (20) des ersten Dichtrings (18) und der zweiten Dichtfläche (24) des zweiten Dichtrings (22) angeordnet ist.

3. Abscheider (1) nach einem der Ansprüche 1 und 2, wobei ein Außenradius (R2) der zweiten Dichtfläche (24) des zweiten Dichtrings (22) größer ist als der Außenradius (R1) der ersten Dichtfläche (20) des ersten Dichtrings (18) und wobei der Auslass (30) des mindestens einen Kanals (26) hin zu der zweiten Dichtfläche (24) des zweiten Dichtrings (22) gerichtet ist.

4. Abscheider (1) nach einem der vorstehenden Ansprüche, wobei der Drosselabschnitt (40) dafür konfiguriert ist, den Einlass (28) des mindestens einen Kanals (26) zumindest teilweise abzudecken.

5. Abscheider (1) nach einem der vorstehenden Ansprüche, wobei der Drosselabschnitt (40) ein Unterlegscheibenelement (40) ist, das dafür konfiguriert ist, auf dem ersten Dichtring (18) aufzuliegen, und dafür konfiguriert ist, den Einlass (28) des mindestens einen Kanals (26) zumindest teilweise abzudecken.

6. Abscheider (1) nach einem der vorstehenden Ansprüche, wobei mindestens zwei Kanäle (26) gleichmäßig um den ersten Dichtungsring (18) verteilt sind.

7. Abscheider (1) nach einem der vorstehenden Ansprüche, wobei die Anzahl von Kanälen (26) im Intervall 4-8 liegt, wobei die Kanäle (26) gleichmäßig um den ersten Dichtungsring (18) verteilt sind.

8. Abscheider (1) nach einem der vorstehenden Ansprüche, wobei das Material im zweiten Dichtring (22) härter ist als das Material im ersten Dichtring (18).

9. Abscheider (1) nach einem der vorstehenden Ansprüche, wobei das Material im zweiten Dichtungsring (22) Siliziumkarbid umfasst und das Material im ersten Dichtungsring (18) Graphit ist.

10. Abscheider (1) nach einem der vorstehenden Ansprüche, wobei das Material im zweiten Dichtungsring (22) eine Wärmeleitfähigkeit, größer als die Wärmeleitfähigkeit des Materials im ersten Dichtungsring (18), aufweist.

11. Abscheider (1) nach einem der vorstehenden Ansprüche, wobei der mindestens eine Kanal (26) im ersten Dichtungsring (18) eine Ausdehnung parallel zur ersten Mittelachse (36) aufweist.

12. Abscheider (1) nach einem der vorstehenden Ansprüche, wobei die erste Dichtfläche (20) des ersten Dichtrings (18) eine erste Normale (42) aufweist und die zweite Dichtfläche (24) des zweiten Dichtrings (22) eine zweite Normale (44) aufweist und wobei die Richtungen der ersten und zweiten Normalen (42, 44) parallel zur Richtung der ersten Mittelachse (36) des ersten Dichtrings (18) und zur zweiten Mittelachse (38) des zweiten Dichtrings (22) sind.

13. Abscheider (1) nach einem der vorstehenden Ansprüche, wobei der erste Dichtring (18) als feststehend konfiguriert ist und der zweite Dichtring (22) als drehbar konfiguriert ist.

## Revendications

1. Séparateur centrifuge (1) comprenant un dispositif d'étanchéité mécanique (16), dans lequel le séparateur (1) comprenant :
un rotor (2) qui forme en lui-même une chambre de séparation (4) et dans lequel la chambre de séparation comprend un empilement de disques de séparation coniques (6) ;
et dans lequel le dispositif d'étanchéité mécanique (16) comprenant :
un premier anneau d'étanchéité (18) comprenant une première surface d'étanchéité (20) ;
un second anneau d'étanchéité (22) comprenant une seconde surface d'étanchéité (24), dans lequel les première et seconde surfaces d'étanchéité (20, 24) sont configurées pour se faire face l'une l'autre afin de former un joint (50) du dispositif d'étanchéité mécanique ;
le premier anneau d'étanchéité (18) présente un premier axe central (36) et le second anneau d'étanchéité (22) présente un second axe central (38), dans lequel le premier axe central (36) du premier anneau d'étanchéité (18) est configuré pour coïncider avec le second axe central (38) du second anneau d'étanchéité (22) ;
au moins un canal (26) pour un fluide de refroidissement est agencé dans le premier anneau d'étanchéité (18), dans lequel le au moins un canal (26) comprend une entrée (28) et une sortie (30) ;
la sortie (30) du au moins un canal (26) est agencée au niveau de la première surface d'étanchéité (20) du premier joint d'étanchéité (18), dans lequel la sortie (30) du au moins un canal (26) est agencée à une distance radiale (D) du premier axe central (36) supérieure à un rayon extérieur (R1) du joint formé (50), dans lequel
une partie de restriction (40) est agencée en relation avec le au moins un canal (26) pour restreindre l'écoulement du fluide de refroidissement.

2. Séparateur (1) selon la revendication 1, dans lequel la sortie (30) du au moins un canal (26) est agencée en connexion fluidique avec la première surface d'étanchéité (20) du premier anneau d'étanchéité (18) et la seconde surface d'étanchéité (24) du second anneau d'étanchéité (22).

3. Séparateur (1) selon l'une quelconque des revendications 1 et 2, dans lequel un rayon extérieur (R2) de la seconde surface d'étanchéité (24) du second anneau d'étanchéité (22) est plus grand que le rayon extérieur (R1) de la première surface d'étanchéité (20) du premier anneau d'étanchéité (18), et dans lequel la sortie (30) du au moins un canal (26) est dirigée vers la seconde surface d'étanchéité (24) du second anneau d'étanchéité (22).

4. Séparateur (1) selon l'une quelconque des revendications précédentes, dans lequel la partie de restriction (40) est configurée pour couvrir au moins partiellement l'entrée (28) du au moins un canal (26).

5. Séparateur (1) selon l'une quelconque des revendications précédentes, dans lequel la partie de restriction (40) est un élément de rondelle (40) configuré pour reposer sur le premier anneau d'étanchéité (18) et configuré pour couvrir au moins partiellement l'entrée (28) du au moins un canal (26).

6. Séparateur (1) selon l'une quelconque des revendications précédentes, dans lequel au moins deux canaux (26) sont répartis uniformément autour du premier anneau d'étanchéité (18).

7. Séparateur (1) selon l'une quelconque des revendications précédentes, dans lequel le nombre de canaux (26) est dans l'intervalle 4-8, lesquels canaux (26) sont répartis uniformément autour du premier anneau d'étanchéité (18).

8. Séparateur (1) selon l'une quelconque des revendications précédentes, dans lequel le matériau du second anneau d'étanchéité (22) est plus dur que le matériau du premier anneau d'étanchéité (18).

9. Séparateur (1) selon l'une quelconque des revendications précédentes, dans lequel le matériau du second anneau d'étanchéité (22) comprend du carbure de silicium et le matériau du premier anneau d'étanchéité (18) est du graphite.

10. Séparateur (1) selon l'une quelconque des revendications précédentes, dans lequel le matériau du second anneau d'étanchéité (22) présente une conductivité thermique supérieure à la conductivité thermique du matériau du premier anneau d'étanchéité (18).

11. Séparateur (1) selon l'une quelconque des revendications précédentes, dans lequel le au moins un canal (26) du premier anneau d'étanchéité (18) présente une extension parallèle au premier axe central (36).

12. Séparateur (1) selon l'une quelconque des revendications précédentes, dans lequel la première surface d'étanchéité (20) du premier anneau d'étanchéité (18) présente une première normale (42) et la seconde surface d'étanchéité (24) du second anneau d'étanchéité (22) présente une seconde normale (44), et dans lequel les directions des première et seconde normales (42, 44) sont parallèles à la direction du premier axe central (36) du premier anneau d'étanchéité (18) et du second axe central (38) du second anneau d'étanchéité (22).

13. Séparateur (1) selon l'une quelconque des revendications précédentes, dans lequel le premier anneau d'étanchéité (18) est configuré pour être stationnaire et le second anneau d'étanchéité (22) est configuré pour être rotatif.
